# EUROPÄISCHE PATENTANMELDUNG

(11) **EP 1 022 548 A1**
(43) Veröffentlichungstag der Anmeldung: **26.07.2000**
(21) Anmeldenummer: 99124829.5
(22) Anmeldetag: 14.12.1999
(51) Int. Cl.: G01F 23/00, G01F 23/26

(54) **Niveauschalter**

(30) Priorität: 19.01.1999 DE 19901814
(71) Anmelder: Volkswagen Aktiengesellschaft, 38436 Wolfsburg (DE)
(72) Erfinder: Drückhammer, Jens, Dr., 38108 Braunschweig (DE)

(57) **Zusammenfassung**

Die Erfindung betrifft einen Niveauschalter zur Bestimmung des Füllstandes in geschlossenen Behältern, insbesondere für Kraftstoffbehälter von Kraftfahrzeugen mit Füllstandsgebern, der kostengünstig zu realisieren ist und eine hohe Robustheit aufweist. Darüberhinaus ist der Niveauschalter für Mehrkammertanks und komplizierte Tankformen geeignet.

Die Erfindung ist dadurch gekennzeichnet, daß in der jeweiligen Meßposition für den Kraftstoff (8) im Kraftstoffbehälter (1) ein Transponder-Niveauschalter (2) angeordnet ist, dem auf der Außenseite des Kraftstoffbehälters (1) ein Signalempfänger (3) zugeordnet ist, der zur kontaktlosen Zustandsabfrage mit einer Auswerteelektronik (7) verbunden ist.

## Beschreibung

Die Erfindung betrifft einen Niveauschalter zur Bestimmung des Füllstandes in geschlossenen Behältern, insbesondere für Kraftstoffbehälter von Kraftfahrzeugen mit Füllstandsgebern.

Für die Bestimmung des Füllstandes innerhalb geschlossener Behälter sind eine Reihe von Meßverfahren und Meßeinrichtungen bekanntgeworden, die entweder mit mechanisch arbeitenden Niveauschaltern in Verbindung mit Schwimmern oder auch mit kapazitiven Sensoren oder anderen Sensoren, z. B. mit Ultraschallsensoren arbeiten.

Allgemein bekannt ist die Verwendung eines mechanisch gedämpften Schwimmers als Kraftstoffvorratssensor innerhalb eines Kraftstoffbehälters, der beispielsweise an einem Hebelarm befestigt ist, der im Kraftstoffbehälter schwenkbar gelagert ist und im Schwenklager mit einem Potentiometer gekoppelt ist. Derartige Kraftsstoffvorratssensoren werden auch als Hebelgeber bezeichnet. Mit Hilfe des Potentiometers läßt sich an Hand der Widerstandsänderung ein elektrisches Signal ableiten, das dem Flüssigkeitsstand im Kraftstoffbehälter proportional ist. Eine derartige Anordnung geht prinzipiell aus der DE 196 24 911 A1 hervor, bei der zusätzliche Maßnahmen getroffen worden sind, um Schwankungen des Flüssigkeitsstandes auszugleichen. Dies erfolgt hier durch die Verwendung eines großflächigen flexiblen Trennelementes anstelle des sonst üblichen Schwimmers.

Der besondere Nachteil solcher Meßanordnungen ist darin zu sehen, daß diese infolge der Vielzahl der mechanisch bewegten Elemente erheblich verschleißbehaftet sind und anfällig gegenüber Erschütterungen sind. Um den Einfluß von Erschütterungen und starken Pegelschwankungen auf das Meßergebnis zu minimieren, werden derartige Meßvorrichtungen mechanisch oder elektrisch stark bedämpft. Das führt jedoch zu einer äußerst trägen Anzeige des Flüssigkeitsstandes.

Weitere Nachteile solcher Sensoren sind darin zu sehen, daß die Eintauchtiefe des Schwimmers von der Dichte des Kraftstoffes und dem Luftdruck abhängt und daß eine große Restfüllmenge im Tank verbleibt. Diese Restfüllmenge, die bei mehreren Litern liegt, kommt am unteren Anschlag infolge der Eintauchtiefe des Schwimmers zustande. Daraus resultiert eine ungenaue "Tank-leer-Anzeige". Ebenso ungenau ist die "Tank-voll-Anzeige"am oberen Anschlag, was ebenfalls durch die Eintauchtiefe des Schwimmers verursacht wird. Aufgrund der schlechten Auflösung bei leerem und bei vollem Tank bestehen schlechte Voraussetzungen für die Verwendung des Füllstandssignales für andere Steuergeräte im Kraftfahrzeug.

So ist eine ungenaue Restweitenanzeige die Folge und keine oder nur eine ungenügende "Tank-leer-Erkennung" möglich.

Weitere Nachteile derartiger Kraftstoffvorratssensoren sind darin zu sehen, daß eine toleranzbehaftete Umrechnung des Füllstandes in Volumen erforderlich ist, wobei die Einflußgrößen Toleranz der Tankform, Alterung des Tanks, Tankinnendruck, Tanktemperatur, Einbaulage des Füllstandssensors sowie Toleranzen des Füllstandsgebers zu berücksichtigen sind. Außerdem sind die Meßwerte von der Fahrzeugneigung abhängig.

Weiterhin sind solche Kraftstoffvorratssensoren für komplizierte Tankformen, z.B. Mehrkammertanks (mehrere Geber erforderlich, nicht erfaßbare Bereiche) oder auch kleine Tanks (hoher relativer Fehler, Einbaubeschränkungen) schlecht geeignet.

Kapazitive Sensoren mit wesentlich besserer Auflösung können zur Ermittlung des Füllstandes von Flüssigkeiten innerhalb von geschlossenen Behältern sind ebenfalls bekannt geworden. Ein derartiger Sensor geht beispielsweise aus der DE 196 44 777 C1 hervor. Diesen kapazitiven Sensoren liegt das Grundprinzip zugrunde, daß die Kapazität eines Kondensators von der relativen Dielektrizitätskonstante des Mediums abhängig ist, welches sich zwischen den Elektroden des Kondensators befindet. Da sich die Dielektrizitätskonstante von Luft und Benzin bzw. Dieselkraftstoff etwa um den Faktor 2 unterscheidet, ändert sich die Kapazität von geeignet ausgeführten Kondensatoren deutlich, wenn Kraftstoff zwischen die Elektroden des Kondensators gelangt. Die Kapazitätsänderung kann dann von einer entsprechenden Auswerteelektronik erkannt und z.B. in unterschiedliche Spannungspegel umgesetzt werden. Werden nun mehrere Kondensatoren im Kraftstofftank übereinander angeordnet, so läßt sich der jeweils aktuelle Füllstand ermitteln.

Insbesondere bei der Verwendung kapazitiver Sensoren war es jedoch bisher problematisch, daß die Auswertelektronik wegen der nur äußerst geringen Kapazitätsänderungen unmittelbar in der Nähe der Sensoren im Kraftstofftank angeordnet werden mußte. Der Grund lag darin, daß lange Zuleitungen hohe Leitungskapazitäten aufweisen, so daß dann die geringen Kapazitätsänderungen der Kondensatoren am Ende der Zuleitung nicht mehr auswertbar waren.

Ein anderes Problem ist auch darin zu sehen, daß es nahezu unmöglich ist, Halbleiter langzeitstabil so zu verpacken, daß das Eindringen von Kraftstoff in den Halbleiter sicher verhindert wird. Der dann in den Halbleiter hineindiffundierende Kraftstoff führt zwangläufig zur Zerstörung der Elektronik.

Andere Möglichkeiten der Füllstandsmessung bestehen auch darin, Ultraschallsensoren als Flüssigkeitsniveauindikatoren einzusetzen, wie dies aus der DE 42 20 714 C2 hervorgeht, oder auch Thermoelemente in Verbindung mit zugeordneten Heizelementen als Niveauschalter einzusetzen. Letztere Möglichkeit ist beispielsweise aus der DE 44 34 646 A1 bekanntgeworden.

Insbesondere letztere Meßverfahren sind jedoch für den Einsatz in Kraftfahrzeugen infolge der schwierigen technischen und preislichen Randbedingungen weniger geeignet. Außerdem sind diese Meßeinrichtungen für den Füllstand kaum oder nur wenig für komplizierte Tankformen oder für Mehrkammertanks geeignet.

Der Erfindung liegt deshalb die Aufgabe zugrunde, einen Niveauschalter der eingangs genannten Art zu schaffen, der kostengünstig zu realisieren ist, eine hohe Robustheit aufweist, erschütterungsfest ist und mit hoher Meßgenauigkeit bei geringem Einfluß von Temperatur, Kraftstoffeigenschaften und Feuchtigkeit arbeitet. Darüberhinaus soll der Niveauschalter für Mehrkammertanks und komplizierte Tankformen geeignet sein.

Die der Erfindung zugrundeliegende Aufgabenstellung wird dadurch gelöst, daß in der jeweiligen Meßposition für den Kraftstoff im Kraftstoffbehälter insbesondere ein kapazitiver Transponder-Niveauschalter angeordnet ist, dem auf der Außenseite des Kraftstoffbehälters ein Signalempfänger zugeordnet ist, der zur kontaktlosen Zustandsabfrage mit einer Auswerteelektronik verbunden ist.

Mit einem derartigen Niveauschalter wird eine einfache, preiswerte und äußerst zuverlässige Messung des Kraftstoffniveaus im Kraftstofftank ermöglicht. Da im Kraftstofftank keinerlei Elektronik untergebracht werden muß, wird eine gute Beständigkeit gegen den Kraftstoff gesichert. Darüberhinaus werden innerhalb des Kraftstofftanks keinerlei elektrische Leitungen benötigt. Als weiterer Vorteil ist anzusehen, daß durch die zuverlässige Messung des Kraftstoffniveaus eine genaue Restweitenanzeige des Kraftstoffinhalts möglich ist. Der Katalysator kann vor Verbrennungsaussetzern geschützt werden. Darüberhinaus ist eine Vermeidung von fehlerhaft abgespeicherten und angezeigten Aussetzern oder Lambdasondenfehlern möglich.

Um eine ausreichende Auflösung des Meßergebnisses zu erreichen, kann eine Vielzahl von Transponder-Niveauschaltern in unterschiedlichen Füllstandshöhen und/oder in unterschiedlichen Bereichen des Kraftstofftanks angeordnet werden, wobei jedem Transponder-Niveauschalter ein Signalempfänger zugeordnet sein kann. Durch eine geeignete Anordnung mehrerer Transponder-Niveauschalter im Kraftstofftank und eine geeignete Auswertung der Meßsignale ist der erfindungsgemäße Transponder-Niveauschalter auch für komplizierte Tankformen und auch für Mehrkammertanks einsetzbar.

Bei ausreichender Reichweite des Transpondersignales ist es auch möglich, einer Gruppe von Transponder-Niveauschaltern oder sämtlichen Transponder-Niveauschaltern einen gemeinsamen Signalempfänger zuzuordnen, wobei die Signalübertragung vom Transponder-Niveauschalter zum Signalempfänger in jedem Fall durch elektromagnetische Wellen erfolgt. Der Signalempfänger kann in diesem Fall als Bestandteil der zentralen Auswerteelektronik ausgebildet sein.

In Fortführung der Erfindung besteht der Transponder-Niveauschalter aus einen Schwingkreis, der eine Miniaturantenne und einen Kondensator enthält.

Ein solcher Transponder-Niveauschalter ist besonders preiswert zu fertigen und kann bevorzugt als eine in Glas eingegossene Tablette ausgeführt werden, indem die Miniaturantenne vollständig eingegossen ist und die Elektroden des Kondensators des Transponder-Niveauschalters als Stifte ausgeführt sind, die aus der Tablette hervorstehen, oder die Kondensatorelektroden als Leiterbahnen ausgebildet sind, welche in das Glas der Tablette eingebettet sind. Damit wird bei einfachster Bauweise eine hohe und langzeitstabile Zuverlässigkeit des Transponder-Niveauschalters erreicht. Es ist jedoch auch möglich, alle anderen Arten von Transponder-Niveauschaltern in Glas oder einem Material mit ähnlichem Eigenschaften zu verkapseln.

Um den Transponder-Niveauschalter besonders einfach und sicher im Kraftstoffbehälter befestigen zu können, ist dieser auf der Tankinnenseite formschlüssig mit dem Kraftstoffbehälter verbunden. Das kann einfach dadurch erfolgen, daß für die Befestigung der Transponder-Niveauschalter auf der Tankinnenseite jeweils eine Vertiefung vorgesehen ist, in die der Transponder-Niveauschalter eingeclipst ist.

Der Signalempfänger ist weiterhin bevorzugt auf der Außenseite des Kraftstoffbehälters unmittelbar gegenüber dem Transponder-Niveauschalter angeordnet, wobei der Signalempfänger beispielsweise als Spule ausgebildet sein kann, die den Transponder-Niveauschalter auf der Außenseite des Kraftstofftanks umgibt.

In einer besonderen Ausgestaltung der Erfindung erfolgt die Bestimmung des Füllstandes zwischen jeweils zwei benachbarten Transponder-Niveauschaltern durch Interpolation mit Hilfe des Kraftstoffverbrauchssignales der Motorsteuerung.

Die Erfindung soll nachfolgend an einem Ausführungsbeispiel näher erläutert werden. In den zugehörigen Zeichnungen zeigen:
- Fig. 1: eine schematische Darstellung eines Kraftstofftanks mit erfindungsgemäßen Transponder-Niveauschaltern;
- Fig. 2: eine Draufsicht auf einen Transponder-Niveauschalter mit einer Miniarturantenne;
- Fig. 3: einen in die Seitenwand des Kraftstofftanks eingeclipsten Transponder-Niveauschalter;
- Fig. 4: eine schematische Darstellung eines Kraftstofftankes mit Transponder-Niveauschaltern mit zentraler Auswerteelektronik.

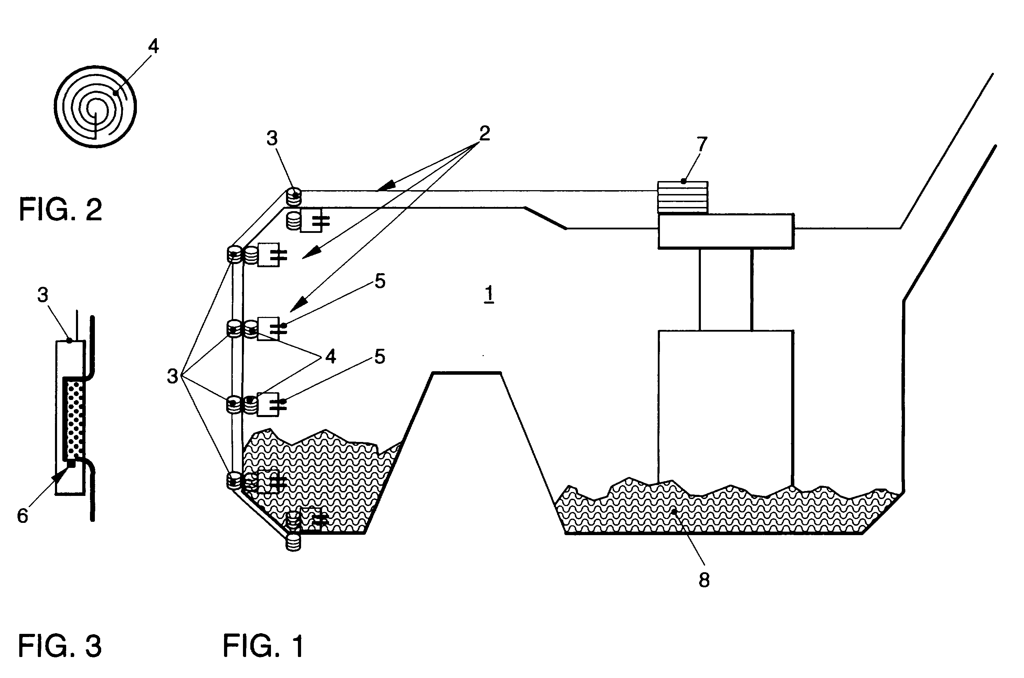

Wie aus Fig. 1 ersichtlich, sind für die Bestimmung des Füllstandes des Kraftstoffes 8 in einem Kraftstoffbehälter 1 aus Kunststoff mehrere Transponder-Niveauschalter 2 auf der Innenseite des Kraftstofftanks 1 befestigt. Die Anzahl und die Verteilung der Transponder-Niveauschalter 2 richtet sich nach der Form des Kraftstofftanks 1 und der gewünschten Auflösung des Meßergebnisses.

Jeder Transponder-Niveauschalter 2 enthält einen Schwingkreis, bestehend aus einer Miniaturantenne 4 (Fig. 2) und einem Kondensator 5. Die Miniaturantenne 4 ist dabei in einer Glastablette eingegossen, aus der im einfachsten Fall Stifte hervorstehen, die den Kondensator 5 darstellen. Dieser konstruktive Aufbau gewährleistet einen lange Lebensdauer und einen wartungsfreien Betrieb. Außerdem kann ein derartiger Transponder-Niveauschalter 2 äußerst kostengünstig hergestellt werden, so daß ohne Kostennachteile eine Vielzahl derartiger Transponder-Niveauschalter 2 im Kraftstofftank 1 angeordnet werden können.

Die Transponder-Niveauschalter 2 in Form von Glastabletten sind auf der Innenseite des Kraftstofftanks 1 in Vertiefungen 6 formschlüssig eingeclipst. Auf diese Weise kann eine sonst notwendige und unsichere Klebverbindung vermieden werden (Fig.3).

Um die Kapazitätsänderung jedes Transponder-Niveauschalters 2 beim Eintauchen in Kraftstoff 8 abfragen zu können, befindet sich auf der Außenseite des Kraftstofftanks 1 unmittelbar neben der Miniaturantenne 4 des Transponder-Niveauschalters 2 ein Signalempfänger 3, der dem Transponder-Niveauschalter 2 während des Abfragevorganges mit Hilfe eines Trägersignales auch die nötige Energie zur Verfügung stellt. Der Signalempfänger 3 ist zu diesem Zweck mit einer Auswerteelektronik 7 verbunden.

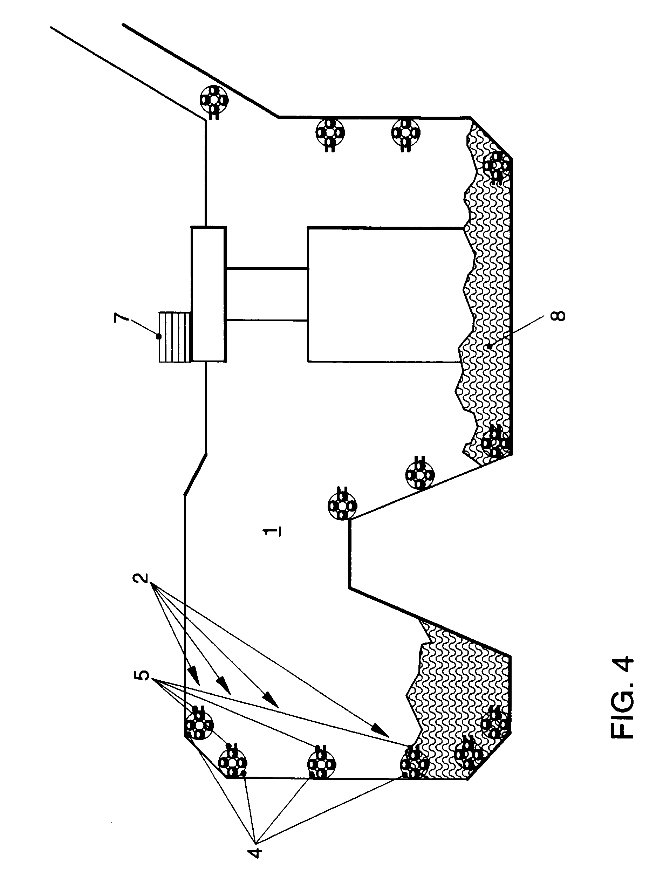

Die Anordnung des Signalempfängers 3 ist von der Reichweite des Signales des Transponder-Niveauschalters 2 abhängig. Die Reichweite bei Wegfahrsperren, die mit Transpondern arbeiten, beträgt beispielsweise nur wenige Zentimeter. In diesem Fall müßte ein Signalempfänger 3 pro Transponder-Niveauschalter 2 in unmittelbarer Nähe untergebracht werden. Es sind aber auch Reichweiten bis zu 1 m realisierbar. In diesem Fall könnten mehrere oder sämtliche im Kraftstofftank 1 befindlichen Transponder-Niveauschalter 2 mit einem zentralen Signalempfänger 3 zusammenarbeiten (Fig. 4).

Werden mehrere Transponder-Niveauschalter 2 in unterschiedlichen Füllstandshöhen angeordnet, so entsteht eine diskrete Füllstandsmessung, bei der durch einfaches Zählen der in Kraftstoff eingetauchten Transponder-Niveauschalter 2 der Füllstand grob ermittelt werden kann. Die Auflösung dieser Methode hängt vom Abstand der Transponder-Niveauschalter 2 zueinander ab.

Um auch zwischen den Transponder-Niveauschaltern 2 den Füllstand bestimmen zu können, erscheint hier eine Kombination der diskreten Füllstandsmessung, die den Füllstand an den Positionen der Transponder-Niveauschalter 2 genau ermitteln kann, mit dem üblicherweise aus der Motorsteuerung vorhandenen Kraftstoffverbrauchssignal sinnvoll. Dadurch ist es möglich, auch zwischen den Positionen der Transponder-Niveauschalter 2 eine ausreichend genaue Aussage über den Kraftstoffvorrat zu erhalten.

Bei komplizierten Formen des Kraftstofftanks 1 und bei Mehrkammertanks ist die einfache Ermittlung der Füllstandshöhe an einer Position einer Kammer problematisch. Einerseits ist die Umrechnung von Füllstand in Volumen aufgrund der unbekannten Teilvolumina in den anderen Kammern nicht überall eindeutig und andererseits wird das Ergebnis durch die nicht bekannte Fahrzeugneigung verfälscht. Eine Abhilfe bietet sich durch die Verteilung ausreichend vieler Transponder-Niveauschalter 2 über sämtliche Kammern des Kraftstofftanks 1 an. Durch die Auswertung sämtlicher Steuersignale kann in Kenntnis der Tankgeometrie der Kraftstoffvorrat ermittelt werden.

### BEZUGSZEICHENLISTE

- 1: Kraftstoffbehälter
- 2: Transponder-Niveauschalter
- 3: Signalempfänger
- 4: Miniaturantenne
- 5: Kondensator
- 6: Vertiefung
- 7: Auswerteelektronik
- 8: Kraftstoff

## Patentansprüche

1. Niveauschalter zur Bestimmung des Füllstandes in geschlossenen Behältern, insbesondere für Kraftstoffbehälter von Kraftfahrzeugen mit Füllstandsgebern, **dadurch gekennzeichnet**, daß in der jeweiligen Meßposition für den Kraftstoff (8) im Kraftstoffbehälter (1) ein Transponder-Niveauschalter (2) angeordnet ist, dem auf der Außenseite des Kraftstoffbehälters (1) ein Signalempfänger (3) zugeordnet ist, der zur kontaktlosen Zustandsabfrage des Transponder-Niveauschalters (2) mit einer Auswerteelektronik (7) verbunden ist.

2. Niveauschalter nach Anspruch 1, **dadurch gekennzeichnet**, daß eine Vielzahl von Transponder-Niveauschaltern (2) in unterschiedlichen Füllstandshöhen und/oder in unterschiedlichen Bereichen des Kraftstofftanks (1) angeordnet sind.

3. Niveauschalter nach Anspruch 1 oder 2, **dadurch gekennzeichnet**, daß jedem Transponder-Niveauschalter (2) ein Signalempfänger (3) zugeordnet ist.

4. Niveauschalter nach Anspruch 1 oder 2, **dadurch gekennzeichnet**, daß sämtlichen Transponder-Niveauschaltern (2) oder einer Gruppe davon ein gemeinsamer Signalempfänger (3) zugeordnet ist.

5. Niveauschalter nach Anspruch 4, **dadurch gekennzeichnet**, daß der Signalempfänger (3) Bestandteil der zentralen Auswerteelektronik (7) ist

6. Niveauschalter nach Anspruch 1 bis 5, **dadurch gekennzeichnet**, daß die Signalübertragung vom Transponder-Niveauschalter (2) zum Signalempfänger (3) durch elektromagnetische Wellen erfolgt.

7. Niveauschalter nach einem der Ansprüche 1 bis 6, **dadurch gekennzeichnet**, daß der Transponder-Niveauschalter (2) einen Schwingkreis, bestehend aus einer Miniaturantenne (4) und einem Kondensator (5), enthält.

8. Niveauschalter nach einem der Ansprüche 1 bis 7, **dadurch gekennzeichnet**, daß die Transponder-Niveauschalter (2) als in Glas oder einem Material mit ähnlichen Eigenschaften eingegossene Tabletten ausgeführt sind.

9. Niveauschalter nach Anspruch 8, **dadurch gekennzeichnet**, daß die Elektroden des Kondensators (5) des Transponder-Niveauschalters (2) als Stifte ausgeführt sind, die aus der Tablette hervorstehen.

10. Niveauschalter nach Anspruch 8, **dadurch gekennzeichnet**, daß die Elektroden des Kondensators (5) des Transponder-Niveauschalters (2) als Leiterbahnen ausgeführt sind, die in das Glas der Tablette eingebettet sind

11. Niveauschalter nach einem der Ansprüche 8 bis 10, **dadurch gekennzeichnet**, daß der Transponder-Niveauschalter (2) auf der Tankinnenseite formschlüssig mit dem Kraftstoffbehälter (1) verbunden ist.

12. Niveauschalter nach Anspruch 11, **dadurch gekennzeichnet**, daß für die Befestigung der Transponder-Niveauschalter (2) auf der Tankinnenseite jeweils eine Vertiefung (6) vorgesehen ist, in die der Transponder-Niveauschalter (2) eingeclipst ist.

13. Niveauschalter nach den Ansprüchen 1 bis 12, **dadurch gekennzeichnet**, daß der Signalempfänger (3) auf der Außenseite des Kraftstoffbehälters (1) unmittelbar gegenüber des Transponder-Niveauschalters (2) angeordnet ist.

14. Niveauschalter nach Anspruch 13, **dadurch gekennzeichnet**, daß der Signalempfänger (3) als Spule ausgebildet ist, die den Transponder-Niveauschalter (2) auf der Außenseite des Kraftstofftanks (1) umgibt.

15. Niveauschalter nach einem der Ansprüche 1 bis 14, **dadurch gekennzeichnet**, daß die Bestimmung des Füllstandes des Kraftstoffes (8) zwischen jeweils zwei benachbarten Transponder-Niveauschaltern (2) durch Interpolation mit Hilfe des Kraftstoffverbrauchssignales der Motorsteuerung erfolgt.
